# EUROPEAN PATENT APPLICATION

(11) **EP 3 795 323 A1**
(43) Date of publication of application: **24.03.2021**
(21) Application number: 20189381.5
(22) Date of filing: 04.08.2020
(51) Int. Cl.: B29C 44/14, B29C 33/18, B29C 33/46, B29C 33/68

(54) **A METHOD FOR MOLDING A PRODUCT COMPRISING A SUBSTRATE LAYER AND A FOAM LAYER AND VEHICLE INTERIOR**

(30) Priority: 18.09.2019 CN 201910881862
(71) Applicant: Faurecia (China) Holding Co., Ltd., Shanghai 201109 (CN)
(72) Inventor: KIM, Keon-tae, SHANGHAI, 201109 (CN); VONWANTOCH-REKOWSKI, Harald, SHANGHAI, 201109 (CN); SIENER, Pierre-Olivier, SHANGHAI, 201109 (CN); ZHAO, Weida, SHANGHAI, 201109 (CN)
(74) Representative: Plasseraud IP

(57) **Abstract**

The present invention relates to a method for molding a product comprising a substrate layer and a foam layer. The method comprises at least the following steps: a step for adsorbing a substrate layer, a step for fastening an intermediate partition medium, a step for adsorbing the intermediate partition medium, a step for mold closing and injection, and a step for demolding and product taking-out, wherein the product comprises the substrate layer (3) and the foam layer (5) is taken out after demolding, and the intermediate partition medium (4) is removed, wherein the intermediate partition medium (4) is a planar film that tends to return to its original shape after being removed, for recycling. The method of the present invention is capable of enabling the production of a foam molding process to be more stable, effectively reducing the cost of a forming mold of the intermediate partition medium (4) while ensuring the quality of the product, and reducing the cost of the process and man-hours.

## Description

### Technical Field

The present invention relates to the technical field of a method for molding a product comprising a substrate layer and a foam layer, and in particular, of vehicle interior.

### Background Art

The focus of car buyers on cars has gradually shifted from maneuverability and safety to the aesthetic of an interior, not only paying attention to the visual appearance of a single interior element, but also paying more attention to coordination among the touch, shape, and color of the interior.

For this purpose, major automobile enterprises have developed vehicle interiors decorated with natural materials, where it is the most difficult to process vehicle interiors decorated with genuine leather, and a series of problems usually occur especially when leather and plastic components are processed by using a lamination process. In order to combine an injection material and a skin layer (for example, leather) quickly and conveniently, in the prior art, the skin layer is put inside a mold directly and then foamed in the mold, so that a foam layer is molded directly on the skin layer. However, the process usually leads to the problems that a high rejection rate occur, such as, problems that a foamed plastics material leaks from the joint of the skin layer, an orange peel effect is produced at the joint, and the joint is unable to be aligned relative to the lower surface of the injection material. Moreover, the sizes of different parts of a multi-layer molded body are unstable in different weather conditions. Therefore, there are lots of problem.

In addition, the in-mold foaming process has a plurality of process steps, which requires plenty of work stations and belongs to a highly labor-intensive process. Moreover, before foaming in the mold, the joint of the skin layer needs to be fully sealed, so as to avoid the case that the foamed plastics leak from the joint when the foaming mold is pressurized. If the joint cannot be fully sealed before foaming in the mold, the skin layer may be damaged, or the touch or appearance of the skin layer may be affected. However, in fact, it is hard for the prior art to ensure that such problems do not occur.

In order to fully seal the joint, a method for inserting a preformed intermediate partition body into the foaming mold before the foaming process also appears in the art, rather than directly foaming the skin layer in the mold, then removing the intermediate partition body after the foaming is finished, and finally wrapping the skin layer on the foam layer. Though the prior art is capable of resolving the problem at the joint between the skin layer and the foam layer, the intermediate partition body needs to be produced and molded by using another mold in advance before introduced into the foaming mold, which undoubtedly leads to an extra increase in the process and man-hours as well as a raise in cost, and has a higher requirement on the precision of the two molds, being adverse to the stability of the foam molding process.

### Disclosure of the Invention

It should be noted that, an objective of the present invention is to overcome one or more shortcomings found in the background art, that is, to introduce an intermediate partition medium rather than directly use a skin layer to foam in the mold, thereby saving the cost of a forming mold to produce an intermediate partition body in the prior art, reducing the process and man-hours, and improving the stability of a foam molding process.

For this purpose, the present invention provides a method for molding a product comprising a substrate layer and a foam layer, wherein the method comprises at least the following steps:
a step for adsorbing a substrate layer, wherein an upper mold and a substrate layer are provided, and the substrate layer is adsorbed onto the upper mold by vacuum;
a step for fastening an intermediate partition medium, wherein a lower mold and an intermediate partition medium are provided, and edges of the intermediate partition medium are fixed relative to the lower mold by a fixture;
a step for adsorbing the intermediate partition medium, wherein the portion other than the edges of the intermediate partition medium is adsorbed to the profile of the lower mold by vacuum so that the portion fully fits the profile of the lower mold;
a step for mold closing and injection, wherein the upper mold and the lower mold are closed against each other, and foam molding is performed by an injection device to form a foam layer between the substrate layer and the intermediate partition medium; and
a step for demolding and product taking-out, wherein a product comprises the substrate layer and the foam layer is taken out after demolding, and the intermediate partition medium is removed,
wherein, the intermediate partition medium is a planar film that tends to return to its original shape after being removed, for recycling.

According to the method of the present invention, before a conventional foam molding process is implemented, an intermediate partition medium that does not need to be preformed is introduced, then the edges of the intermediate partition medium are fixed relative to the lower mold by the fixture, the intermediate partition medium fully fits the profile of the lower mold by vacuum, and the foam molding process is implemented subsequently. After the foam layer is molded, the intermediate partition medium is removed, so as to produce the product comprising the substrate layer and the foam layer with low costs and high quality.

Moreover, according to the method of the present invention, in order to remove the intermediate partition medium after the foam layer is molded, the intermediate partition medium is optimally made of a non-polar material, which is not stuck to the foam layer and does not affect the liquidity of the foam, and the intermediate partition medium is capable of returning to its original shape to be molded after being removed, so that it may be transformed into a shape of any product surface, by a vacuum function of the mold, for repeated recycling, thereby reducing the waste of the intermediate partition medium, effectively reducing the cost of the forming mold of the intermediate partition medium as well as reducing the cost of the process, saving unnecessary man-hours, and facilitating supply chain management based on the realization of the objective of the present invention.

In different embodiments of the method according to the present invention, we can depend on one and/or more following configurations in a single or combination way:
In an embodiment, the method further comprises a step for preheating the intermediate partition medium, between the step for fastening an intermediate partition medium and the step for adsorbing the intermediate partition medium, wherein the intermediate partition medium is preheated. The intermediate partition medium after being heated has better malleability.

In an embodiment, the step for adsorbing the intermediate partition medium is carried out by vacuum holes arranged at R angles of the lower mold, so that the intermediate partition medium better fits the profile of the R angles of the lower mold.

In an embodiment, the step for adsorbing the intermediate partition medium comprises segmentally performing a vacuum operation for adsorbing the intermediate partition medium onto the lower mold. Preferably, the vacuum operation is firstly performed on the part to be vacuumed with a large area, and then the vacuum operation is performed on the details of the profile of the surface of the first lower mold.

In an embodiment, the step for adsorbing the intermediate partition medium comprises a sub-step for applying a line vacuum or a point vacuum to different regions of the lower mold. Preferably, the line vacuum is used in a plane boundary with the simple structure, and the line vacuum is capable of adsorbing the intermediate partition medium into a modeling with a large area in an even and easy way, while the point vacuum is used in a corner or a boundary with the modeling having a large fluctuation, and the point vacuum is capable of realizing a fast modeling.

In an embodiment, the step for adsorbing the intermediate partition medium comprises a sub-step for adjusting different vacuum strengths for different regions of the lower mold. In this way, the vacuum can use and avoid different modelings.

In an embodiment, the method further comprises a detecting step for detecting operations of vacuum pumps by vacuum gauges on the vacuum pumps with which the upper mold and the lower mold are equipped. In this way, whether an air leak occurs can be detected at any time.

In an embodiment, the method further comprises a blowing step for blowing the product to facilitate demolding when it is found to be difficult to demold during the step for demolding and product taking-out.

In an embodiment, the intermediate partition medium is made of a polyurethane or silicon material.

In an embodiment, the method further comprises an adhesion step, wherein a skin layer is wrapped on the surface of the foam layer after the intermediate partition medium is removed, and the substrate layer, the foam layer and the skin layer are stuck together. In this way, no foam leaks from the joint between the foam layer and the skin layer, thereby avoiding the foregoing series of common problems such as an untight joint and improving the stability of the product.

Based on the above, the method according to the present invention is capable of effectively resolving many problems that may exist in the prior art of foam molding, such as an untight joint and an orange peel effect at the joint, thereby improving the stability of the foam molding process, and reducing the process, man-hours, and the cost based on the realization of the objective of the present invention.

Another aspect of the present invention further relates to a vehicle interior, comprising the product made by the method according to any one of the foregoing embodiments.

### Brief Description of the Drawings

It should be understood that, in the present invention, except obviously contradictory cases or incompatible cases, all features, variant ways and/or specific embodiments may be combined according to a plurality of combinations.

By reading the following specific embodiments as non-limiting descriptions with reference to the accompanying drawings, other features and advantages of the present invention will be apparent. In the drawings:
FIG. 1 is a flowchart of a method for molding a product comprising a substrate layer and a foam layer according to the present invention;
FIG. 2 is a schematic diagram of an upper mold and a lower mold used in the method in FIG. 1;
FIG. 3 is a schematic stage diagram of a step for fastening an intermediate partition medium performed after a step for adsorbing a substrate layer is finished in the method in FIG. 1;
FIG. 4 is a schematic stage diagram of a step for adsorbing the intermediate partition medium in the method in FIG. 1;
FIG. 5 and FIG. 6 are schematic stage diagrams of a step for mold closing and injection in the method in FIG. 1;
FIG. 7 and FIG. 8 are schematic stage diagrams of a step for demolding and product taking-out in the method in FIG. 1; and
FIG. 9 is a schematic stage diagram of an adhesion step in the method in FIG. 1.

### Description of Embodiments

It should be understood that, the foregoing accompanying drawings are not in a substantial proportion, but merely simple drawings used to describe a plurality of preferred features of the basic principles of the present invention. Design features disclosed in the present invention, such as a dimension, a direction, a location, and a shape, are determined by specific applications and using environments.

The present invention is described in detail with reference to embodiments and the accompanying drawings. In the accompanying drawings, the same reference number refers to the same or equivalent elements of the present invention in all the accompanying drawings.

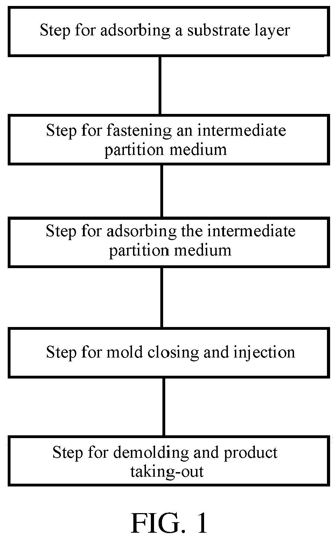

FIG. 1 is a flowchart of a method for molding a product comprising a substrate layer and a foam layer, at least comprising a step for adsorbing a substrate layer, a step for fastening an intermediate partition medium, a step for adsorbing the intermediate partition medium, a step for mold closing and injection, and a step for demolding and product taking-out. The following describes each step of the method according to the present invention in detail.

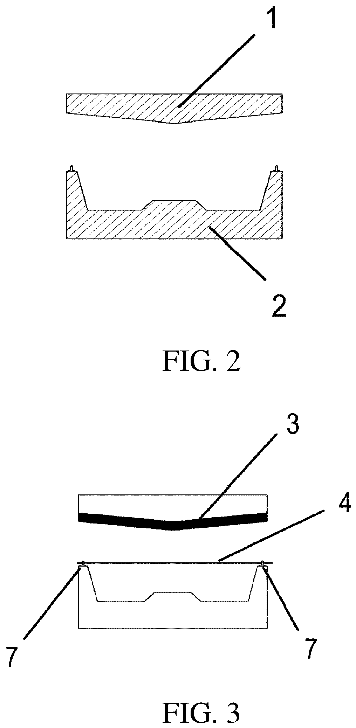

FIG. 2 is a schematic diagram of an upper mold 1 and a lower mold 2 used in the method according to the present invention.

FIG. 3 shows a stage of a step for fastening an intermediate partition medium performed after a step for adsorbing a substrate layer is finished in the method according to the present invention.

The step for adsorbing a substrate layer comprises: providing an upper mold 1 and a substrate layer 3, and adsorbing the substrate layer 3 onto the upper mold 1 by vacuum.

Specifically, the material of the substrate layer 3 is an injection material used for foam molding and capable of being stuck to the foam layer 5.

The step for fastening an intermediate partition medium comprises: providing a lower mold 2 and an intermediate partition medium 4, and fixing edges of the intermediate partition medium 4 relative to the lower mold 2 by a fixture 7.

Specifically, the intermediate partition medium 4 has the following basic features:
strong tensile strength, where the tensile strength needs to be high enough so that the intermediate partition medium 4 is not easy to damage when in contact with a mold;
strong malleability, where the intermediate partition medium 4 after being heated has better malleability, so as to be capable of fully fitting the profile of the lower mold 2 by vacuumizing the bottom of the lower mold 2;
the thickness is consistent with the thickness of a material of a skin layer 8 (for example, leather) wrapped; and
the intermediate partition medium 4 is made of a coiled material, to ensure that the edges of the coiled material are not deformed because of a stretch when the intermediate partition medium 4 is adsorbed onto the lower mold 2 by vacuum.

Moreover, the intermediate partition medium 4 is optionally made of a polyurethane or silicon material, which has good physical and mechanical properties, wear resistance, and high pressure resistance, and in addition, its ageing resistance, ozone resistance, and oil resistance are fairly good as well.

The fixture 7 enables the region between the intermediate partition medium 4 and the lower mold 2 to form a closed space, and the fixture 7 is capable of fixing the intermediate partition medium 4 over the lower mold 2. When a vacuum molding starts, the edges of the intermediate partition medium 4 cannot be displaced, but extend to the lower mold 2 depending on its malleability and fully fit the lower mold 2.

The mold and the intermediate partition medium 4 have no ventilation or holes, which is still capable of ensuring that the intermediate partition medium 4 does not move even if the fixture 7 needs to ensure that its fastening force is at at least one negative atmospheric pressure.

Moreover, the fixture 7 may be optionally made of a metal material, and is preferably designed on the edges of the outermost ring of the intermediate partition medium 4. A groove may be opened on the mold when fastening is performed, so that the intermediate partition medium 4 can be fixed on the mold to the utmost extent, and the calculation of a magnitude of interference can be considered during the design. The fixture 7 is designed in a manner that it has no interference in the modeling of the upper mold 1, so as to avoid the case that the upper mold 1 or the fixture 7 is damaged during mold closing. The corresponding slot of the lower mold 2 is consistent with the fixture 7 as well.

Advantageously, in order to pick and place the intermediate partition medium 4 in a quick and safe way, the fixture 7 is designed into a push-rod type. During the fixing, the fixture 7 is prevented from, by a locking mechanism, being separated from the fixed position and failing to fix the intermediate partition medium 4 when vacuum suction is performed on the intermediate partition medium 4.

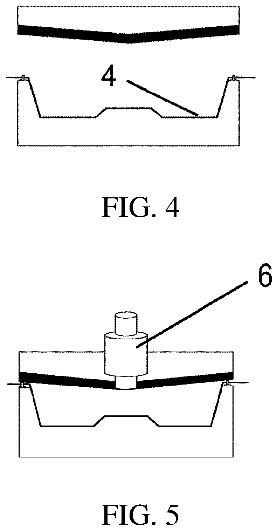

FIG. 4 shows a stage of a step for adsorbing the intermediate partition medium in the method of the present invention.

The step for adsorbing the intermediate partition medium comprises: adsorbing the portion other than the edges of the intermediate partition medium 4 to the profile of the lower mold 2 by vacuum so that the portion fully fits the profile of the lower mold 2.

To enable the intermediate partition medium 4 to fully fit the lower mold 2, the step for adsorbing the intermediate partition medium is carried out preferably by vacuum holes arranged at R angles of the lower mold 2.

When the mold starts with a vacuum, the intermediate partition medium 4 can be adsorbed to fit the whole profile of the lower mold 2 by the vacuum holes in the space automatically. To ensure the stability of the process, the vacuum holes need to be arranged at all the R angles of the lower mold 2. The size of the vacuum holes is designed in a manner that the vacuum holes will not cause the deformation of a surface of the lower mold 2, but the intermediate partition medium 4 can be perfectly adsorbed to fit the profile and modeling of the lower mold 2.

Moreover, the step for adsorbing the intermediate partition medium may comprise segmentally performing a vacuum operation for adsorbing the intermediate partition medium 4 onto the lower mold 2.

Moreover, to enable the intermediate partition medium 4 to fully fit the lower mold 2, the vacuum operation needs to be segmentally performed. Preferably, the vacuum operation is performed on a part with a large area of the surface of the lower mold, and then the vacuum operation is performed on the details of the profile of the surface of the lower mold. The following describes a function and modeling of a vacuum structure in detail.

The vacuum of the mold needs to be designed according to the modeling of a product required. All pipelines of the vacuum need to be integrated on a main vacuum interface for convenient connection with the outside, and the whole inside of the mold is a space without any ventilation.

The step for adsorbing the intermediate partition medium comprises a sub-step for applying a line vacuum or a point vacuum to different regions of the lower mold 2. The vacuum function may be started in 1 to 3 steps according to an actual structure, so as to make it convenient for an operator to design and drive, by the function, the intermediate partition medium 4 to extend to a position in which it is difficult to mold the intermediate partition medium.

In terms of the design of a vacuum modeling, a line vacuum may be used in a simple plane boundary, and the line vacuum is capable of adsorbing the intermediate partition medium 4 onto the lower mold 2 in an even and easy way and then molding the intermediate partition medium 4.

A point vacuum may be used in a corner or a boundary with the modeling having a large fluctuation, and the point vacuum is capable of realizing a fast molding for a modeling.

Positions of the vacuum are usually disposed at a boundary of the modeling. The adsorbing effect of the positions has a direct influence on the molding of the following process. For an approximately upside-down mechanism, whether to increase the size of a vacuum mechanism needs to be considered, a vacuum density of the positions is increased on condition that the modeling is not affected, and the vacuum hole (line) is also considered to be arranged on the position of the plane.

Moreover, the actual distance between the lower mold 2 and the intermediate partition medium 4 may be positively correlated to a vacuum start sequence. The lower mold 2 is designed in a manner that a vacuum position is near to the intermediate partition medium 4 as much as possible, so as to conveniently release the vacuum function, but no interference is caused to the modeling of the upper mold 1 and the disposition of the fixture 7 of the lower mold 2.

Advantageously, in addition to the inside vacuum, a vacuum on the edge may also be designed, and its position may be arranged on two sides of the fixture 7, so as to form a closed vacuum circle. This vacuum function usually needs to start first, so as to ensure that when the vacuum starts inside, an air leak will not be caused due to the overfilling of the fixing area.

The vacuum function needs to be capable of starting vacuum strengths with the same force at different locations at the same time on the premise that the profile shape of the lower mold 2 is calculated. The vacuum strength is not reduced suddenly due to the start of a certain vacuum. On the premise that there is no air leak, the constancy and sustainability of the sizes of vacuums from parts to a whole need to be ensured, and the operation side of the mold needs to be provided with directly operable buttons for all the functions.

As a variant, the step for adsorbing the intermediate partition medium comprises a sub-step for adjusting different vacuum strengths for different regions of the lower mold 2. The vacuum function needs to be capable of distinguishing, in each operation for starting the vacuum, a subdivided start manner of vacuums with different strengths, so as to help the vacuum adapt to a local profile.

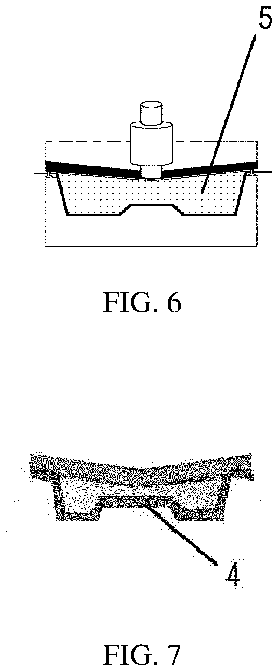

FIG. 5 and FIG. 6 show a stage of a step for mold closing and injection in the method according to the present invention.

The step for mold closing and injection comprises: closing the upper mold 1 and the lower mold 2 against each other, and performing foam molding by an injection device 6 to form a foam layer 5 between the substrate layer 3 and the intermediate partition medium 4.

A sharp surface shall be avoided being used as a contact surface of the injection device 6 as much as possible, avoiding the case that the intermediate partition medium 4 is damaged, and the contact surface is preferably designed into a cylinder.

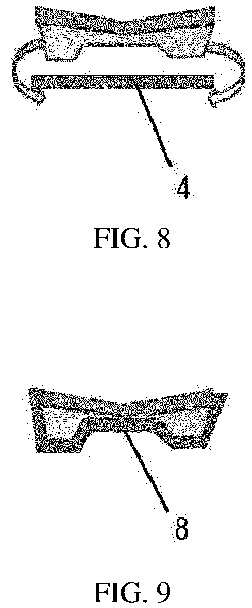

FIG. 7 and FIG. 8 show a stage of a step for demolding and product taking-out in the method according to the present invention.

The step for demolding and product taking-out comprises: taking out a product comprising the substrate layer 3 and the foam layer 5 after demolding, and removing the intermediate partition medium 4.

As described above, because the intermediate partition medium 4 is made of a non-polar material, which is not stuck to the foam layer 5 and does not affect the liquidity of the foam, the intermediate partition medium 4 is easy to be directly removed after the foam layer 5 is molded and does not affect the modeling of the foam layer 5. The intermediate partition medium 4 is capable of returning to its original shape to be molded after being removed, so that it may be transformed into a shape of any product surface, by the vacuum function of the mold, for repeated recycling, thereby reducing the waste of the intermediate partition medium 4, and effectively reducing the cost of the forming mold of the intermediate partition medium 4 as well as reducing the cost of the process based on the realization of the objective of the present invention.

Moreover, the method further comprises a step for blowing the product to facilitate demolding when it is found to be difficult to demold during the step for demolding and product taking-out. In some cases, though the vacuum function stops when foaming and casting end, negative pressure is still generated under a quite good vacuum, which leads to a phenomenon that it is difficult to take out a molded product. In this case, the negative pressure can be released instantaneously by a blowing device disposed in a vacuum cavity, thereby ensuring the appearance of the product.

FIG 9 shows a stage of an adhesion step in the method according to the present invention.

The adhesion step comprises: wrapping a skin layer 8 on the surface of the foam layer 5 after the intermediate partition medium 4 is removed, and sticking the substrate layer 3, the foam layer 5 and the skin layer 8 together.

During this period, the skin layer 8, such as leather stuck to the foam layer 5 and the substrate layer 3, is used according to the method of the present invention rather than directly foamed inside the mold, thereby avoiding a series of common problems such as an untight joint and an orange peel effect at the joint mentioned in the background art, and improving the stability of the foam molding process.

Moreover, in order to be suitable for implementing vacuum adsorption, a step for preheating the intermediate partition medium between the step for fastening an intermediate partition medium and the step for adsorbing the intermediate partition medium may be further comprised, during which the intermediate partition medium 4 is preheated.

Preheating the intermediate partition medium 4 before putting it into the mold will have a better effect on the final malleability. When the intermediate partition medium 4 preheated is put into the mold, the intermediate partition medium 4 is not flat, but has a sinking part caused by its own gravity. The sinking part extends the modeling of the intermediate partition medium 4 quite well, and plays a good role in the molding of the profile itself. Therefore, the intermediate partition medium 4 does not need to be drawn flat when it is being disposed.

It should be noted that, usually the sinking caused by the gravity is concentrated in the center of gravity (central part) of the intermediate partition medium 4, so that after the vacuum operation is finished, the intermediate partition medium 4 at edge positions that are not close to the center of gravity will receive the greatest tensile action, and the intermediate partition medium 4 is likely to be thinner in the positions.

The step for preheating the intermediate partition medium may be implemented in a preheating oven.

Moreover, the method further comprises a detecting step for detecting operations of vacuum pumps by vacuum gauges on the vacuum pumps with which the upper mold 1 and the lower mold 2 are equipped.

The vacuum pump equipped in the mold is connected to the vacuum gauge. The vacuum pump is continuously stable and the output is kept at a fixed value. After a vacuum step is finished, whether there is a vacuum leak and whether the requirement for a vacuum condition needed is met can be checked by the vacuum gauge connected. The vacuum degree can be checked for each step of the vacuum operation by connecting the vacuum gauge according to requirements.

Moreover, the method may further comprise a check step. Because the intermediate partition medium 4 needs to be recycled, a check is needed for the surfaces of the mold and the intermediate partition medium 4 to make sure there is no impurity left by the foam molding last time, before the use of the intermediate partition medium 4 each time. If the impurity is not removed, the modeling of the final product will be affected directly, and the vacuum structure of the mold is easily to be blocked.

In order to avoid the case that the vacuum structure of the mold is blocked, and in consideration of daily maintenance, usually the vacuum hole (line) is connected to the vacuum cavity directly. In terms of daily maintenance, if the vacuum cavity is blocked due to dust or impurities, a plastic product (not metal) less than a distance between the vacuum holes can be used to dredge the vacuum hole and remove the blockage to the vacuum cavity. Therefore, the distance between the vacuum hole and the vacuum cavity is designed as a straight line. The vacuum cavity inside the mold is guided to a main vacuum valve in need of a larger vacuum hole. In an embodiment in which the vacuum operation needs to be segmentally performed, all vacuum cavities need to be separated when the vacuum is segmented.

Finally, it is stated again that, because the intermediate partition medium 4 is absorbed by vacuum of the lower mold 2, the space between the intermediate partition medium 4 and the profile of the lower mold 2 should be sealed to prevent an air leak. In this respect, the intermediate partition medium 4 needs to be impermeable, is usually approximately 1 millimeter in thickness and has excellent elongation. Different thicknesses may be used in different embodiments, and the thickness of the intermediate partition medium 4 is fully consistent with its material and malleability.

The embodiments above are merely used as examples, and are not intended to limit the present invention. On this basis, the person skilled in the art can anticipate other embodiments that can achieve the same functions within the protection scope of the claims of the present invention.

The person skilled in the art masters a plurality of embodiments, variants, and improvements. In particular, it should be clear that, except obviously contradictory cases or incompatible cases, all the foregoing features, variant ways and/or specific embodiments of the present invention may be combined with each other. All the embodiments, variants and improvements fall within the protection scope of the present invention.

## Claims

1. A method for molding a product comprising a substrate layer and a foam layer, wherein the method comprises at least the following steps:
a step for adsorbing a substrate layer, wherein an upper mold (1) and a substrate layer (3) are provided, and the substrate layer (3) is adsorbed onto the upper mold (1) by vacuum;
a step for fastening an intermediate partition medium, wherein a lower mold (2) and an intermediate partition medium (4) are provided, and edges of the intermediate partition medium (4) are fixed relative to the lower mold (2) by a fixture (7);
a step for adsorbing the intermediate partition medium, wherein the portion other than the edges of the intermediate partition medium (4) is adsorbed to the profile of the lower mold (2) by vacuum so that the portion fully fits the profile of the lower mold (2);
a step for mold closing and injection, wherein the upper mold (1) and the lower mold (2) are closed against each other, and foam molding is performed by an injection device (6) to form a foam layer (5) between the substrate layer (3) and the intermediate partition medium (4); and
a step for demolding and product taking-out, wherein a product comprises the substrate layer (3) and the foam layer (5) is taken out after demolding, and the intermediate partition medium (4) is removed,
wherein, the intermediate partition medium (4) is a planar film that tends to return to its original shape after being removed, for recycling.

2. The method according to claim 1, wherein the method further comprises a step for preheating the intermediate partition medium, between the step for fastening an intermediate partition medium and the step for adsorbing the intermediate partition medium, wherein the intermediate partition medium (4) is preheated.

3. The method according to claim 1, wherein the step for adsorbing the intermediate partition medium is carried out by vacuum holes arranged at R angles of the lower mold (2).

4. The method according to claim 3, wherein the step for adsorbing the intermediate partition medium comprises segmentally performing a vacuum operation for adsorbing the intermediate partition medium (4) onto the lower mold (2).

5. The method according to claim 4, wherein the step for adsorbing the intermediate partition medium comprises a sub-step for applying a line vacuum or a point vacuum to different regions of the lower mold (2).

6. The method according to claim 4, wherein the step for adsorbing an intermediate partition medium comprises a sub-step for adjusting different vacuum strengths for different regions of the lower mold (2).

7. The method according to claim 1, wherein the method further comprises a detecting step for detecting operations of vacuum pumps by vacuum gauges on the vacuum pumps with which the upper mold (1) and the lower mold (2) are equipped.

8. The method according to claim 1, wherein the method further comprises a blowing step for blowing the product to facilitate demolding when it is found to be difficult to demold during the step for demolding and product taking-out.

9. The method according to claim 1, wherein the intermediate partition medium (4) is made of a polyurethane or silicon material.

10. The method according to any one of claims 1 to 9, wherein the method further comprises an adhesion step, wherein a skin layer (8) is wrapped on the surface of the foam layer (5) after the intermediate partition medium (4) is removed, and the substrate layer (3), the foam layer (5) and the skin layer (8) are stuck together.

11. A vehicle interior, comprising the product made by the method according to any one of claims 1 to 9.
